# EUROPÄISCHE PATENTSCHRIFT

(11) **EP 0 520 247 B1**
(45) Veröffentlichungstag und Bekanntmachung des Hinweises auf die Patenterteilung: **06.08.1997**
(21) Anmeldenummer: 92109822.4
(22) Anmeldetag: 11.06.1992
(51) Int. Cl.: G01S 17/02, G01S 7/48, G01S 15/04, G01S 7/52, G08B 13/187

(54) **Einen Sender, einen Empfänger und eine Schaltungsanordnung zur Signalauswertung aufweisende Überwachungseinrichtung**
Surveillance apparatus comprising, transmitter, receiver and signal processing circuit
Dispositif de surveillance comportant un émetteur, un récepteur et un circuit d'analyse de signal

(30) Priorität: 15.06.1991 DE 4119797
(43) Veröffentlichungstag der Anmeldung: 30.12.1992
(73) Patentinhaber: Leuze electronic GmbH + Co., D-73277 Owen (DE)
(72) Erfinder: Argast, Martin, W-7435 Hülben (DE)

(56) Entgegenhaltungen:
- EP-A- 0 424 097
- DE-A- 3 532 197
- DE-A- 3 627 972
- DE-A- 3 804 073
- GB-A- 2 064 910
- US-A- 4 245 559
- US-A- 4 879 461

## Beschreibung

Einen Sender, einen Empfänger und eine Schaltungsanordnung zur Signalauswertung aufweisende Überwachungseinrichtung.

Die Erfindung bezieht sich auf eine Überwachungseinrichtung gemäß dem Oberbegriff des Anspruchs 1.

Eine Überwachungseinrichtung dieser Art ist aus der EP-A-424097 bekannt. Dort ist eine Vorrichtung zur Detektion von Objekten in einem Überwachungsbereich beschrieben, wobei die Empfangssignale mit zwei Pulsfolgen unterschiedlicher Frequenz nacheinander abgetastet werden. Durch die Differenzbildung der mit den verschiedenen Pulsfolgen abgetasteten Empfangssignale können von einem Hintergrund stammende Signale von Signalen, die von einem im Überwachungsbereich befindlichen Objekt herrühren, unterschieden werden.

Zusätzlich wird zur Elimination von Signalen, die von einem sich bewegenden Hintergrund stammen, die Amplitude der Empfangssignale ausgewertet.

Es sind Lichttaster dieser Art bekannt, bei denen die Direktreflexion des Objekts ausgenutzt wird (Bundesanstalt für Arbeitsschutz: Sonderschrift S. 21, 1986, Seiten 18/19). Schlecht reflektierende Objekte oder Gegenstände mit spiegelnder Oberfläche, die sich im zu überwachenden Bereich befinden oder in diesen Bereich eindringen sind mit den bekannten Lichttastern zumindest nicht zuverlässig genug erfaßbar.

Der Erfindung liegt die Aufgabe zugrunde, eine Überwachungseinrichtung der gattungsgemäßen Art zu schaffen, deren Funktionsprinzip die der Ausnutzung der Direktreflexion der Objekte anhaftenden Nachteile ausschließt und in einen definierten Überwachungsbereich gelangende Objekte unabhängig von deren Reflexionsvermögen und deren Lage sicher und zuverlässig erkennbar macht.

Diese Aufgabe ist erfindungsgemäß mit den kennzeichnenden Merkmalen des Anspruchs 1 gelöst.

Weiterbildungen und zweckmäßige Ausgestaltungen der Erfindung sind in den Unteransprüchen angegeben.

Die Erfindung wird im nachstehenden anhand der Zeichnung erläutert.

Es zeigen
- Fig. 1: eine Überwachungseinrichtung in Form eines Sicherheitslichttasters in Blockdarstellung,
- Fig. 2: eine Prinzipdarstellung des Sicherheitslichttasters gemäß Fig. 1 mit zugeordneter Referenzfläche,
- Fig. 3: eine Darstellung gemäß Figur 2 mit im Überwachungsbe-reich befindlichem Objekt,
- Fig. 4: eine Darstellung gemäß Figur 2 mit im Überwachungsbereich befindlicher geneigter spiegelnder Fläche,
- Fig. 5: ein Flußdiagramm des Sicherheitstasters,
- Fig. 6: ein Blockschaltbild einer Überwachungseinrichtung für die Lichtlaufzeit und Ultraschallechomessung.

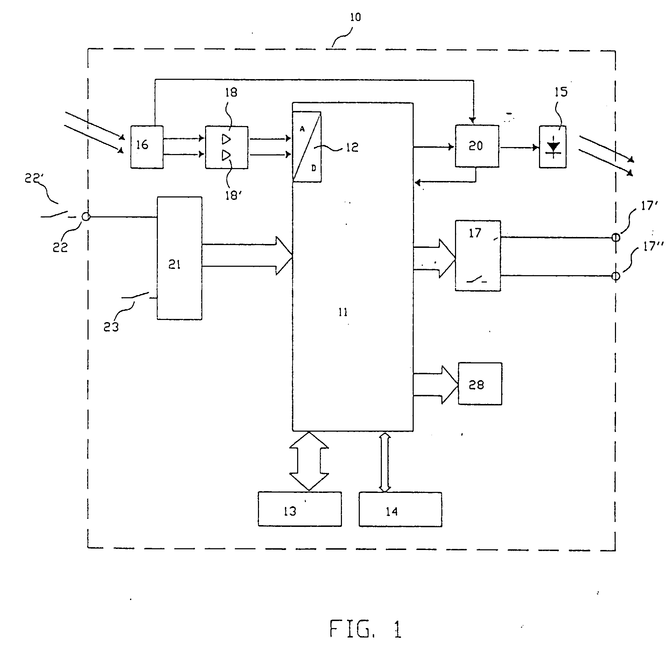

Die gemäß Figur 1 als Sicherheitslichttaster ausgebildete Einrichtung 10 enthält einen Mikroprozessor 11 mit Analog / Digitalwandler 12, einen Programmspeicher 13 (EPROM), einen Datenspeicher (EEPROM) 14 sowie einen Lichtsender 15, einen Lichtempfänger 16 und ein Relais 17. Der Lichtempfänger 16 ist als hochauflösender analoger Positionsdetektor ausgebildet, dessen empfangslichtabhängig generierten beiden positionsproportionalen Teilströme jeweils einem Verstärker 18, 18' zugeführt werden, an deren Ausgang der Analog-Digitalwandler 12 angeschlossen ist.

Die Leistung des vom Mikroprozessor 11 bzw. von dessen nicht gezeichnetem Schwingquarz getakteten Lichtsenders 15 wird in Abhängigkeit von einem der beiden Teilströme des Lichtempfängers 16, beispielsweise abhängig vom größeren Teilstrom (I-nah), über einen Regelkreis 20 geregelt.

Am Ausgang 17' des Relais 17 steht das Signal "Schutzfeld frei" an, am Ausgang 17'' wird das Signal "Schutzfeld nicht frei" ausgegeben. Der jeweilige Schaltzustand wird dabei durch eine LED-Anzeige 28 optisch erkennbar gemacht. Als Lichtsender 15 eignet sich beispielsweise eine Lumineszenzdiode, gegebenenfalls auch ein Halbleiter-Laser.

Dem Mikroprozessor 11 ist ein für die Pegelanpassung und zum Schutz der Schaltungsanordnung vorgesehener Optokoppler 21 mit einem Testeingang 22 und einer teach-in-Taste 23 zugeordnet. Bei Betätigung des Testschalters 22' erfolgt ein selbsttätiger Funktionstest des Lichttasters (Überprüfung sämtlicher Aus- und Eingänge des Lichttasters 10 durch den Mikroprozessor 11 einschließlich dessen interner Speicher). Der Testschalter 22' kann dabei in einem entfernt liegenden Schaltpult angeordnet sein und von einer Bedienungsperson wahlweise betätigt werden, beispielsweise bei der jeweiligen Inbetriebnahme des Lichttasters 10.

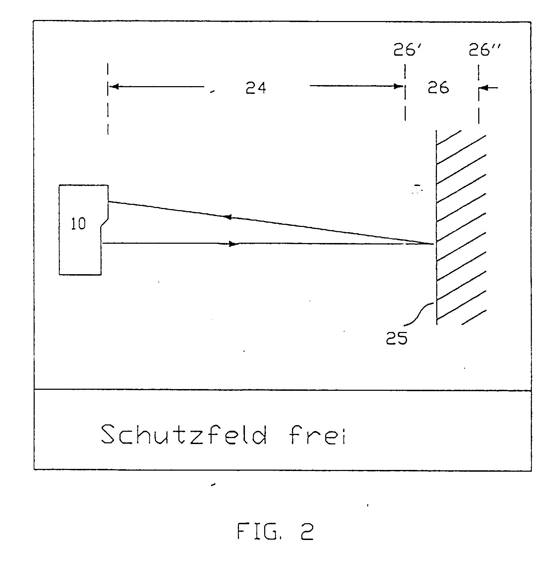

Wie aus den Figuren 2 bis 4 ersichtlich ist, ist der Einrichtung bzw. dem Lichttaster 10 eine einen zu überwachenden Schutzbereich 24 begrenzende Referenzfläche 25 zugeordnet, wobei ein Toleranzbereich 26 mit den Grenzen 26' und 26'' definiert ist.

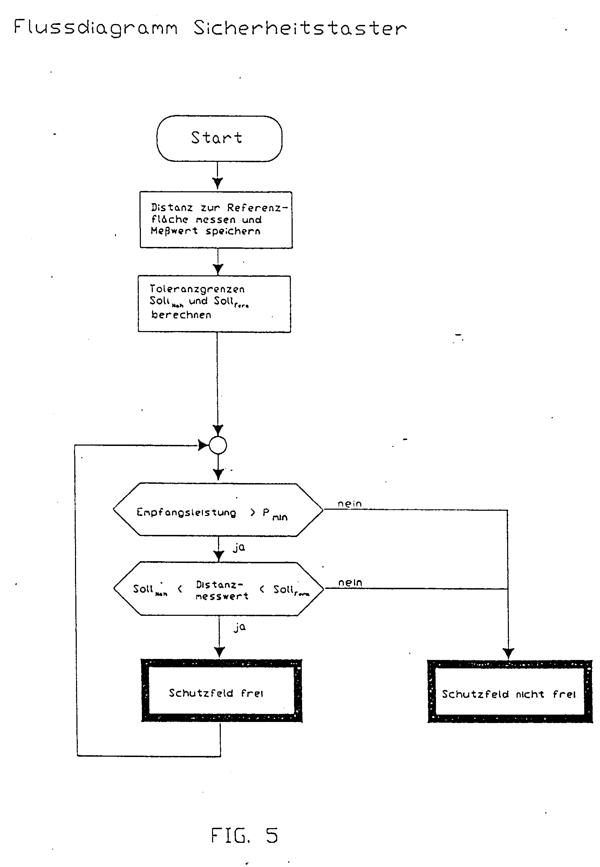

Mit der teach-in-Taste 23 (siehe Fig. 1) wird das Programm gemäß Figur 5 gestartet.

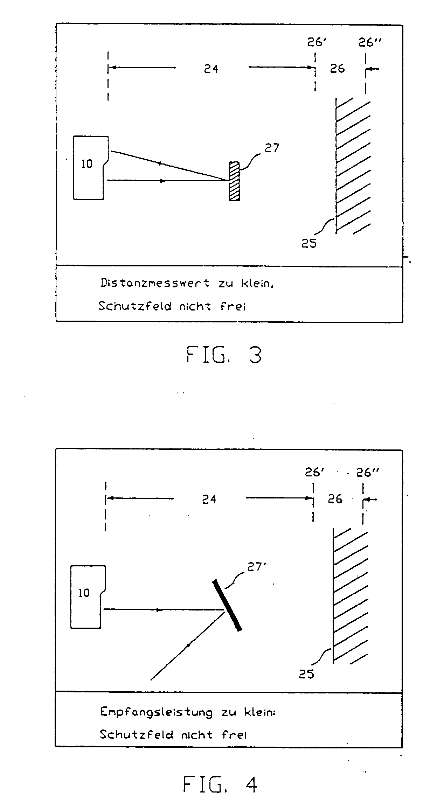

Demnach wird zunächst die Distanz vom Lichttaster 10 zur Referenzfläche 25 nach dem Triangulationsprinzip gemessen bzw. berechnet und als Sollwert im Speicher 14 (EEPROM) gespeichert, ferner werden die Toleranzgrenzen 26' und 26'' (Soll nah und Soll fern) berechnet. Bei hinreichender bzw. einen Mindestwert übersteigender Empfangsleistung im Lichtempfänger, für die die Teilströme im Empfänger 16 (Positionsdetektor) Kriterium sind, und bei im Toleranzbereich liegendem Distanzmeßwert (Istwert) wird am Ausgang 17' des Relais 17 Signal "Schutzfeld frei" ausgegeben (siehe hierzu Fig. 2). Dementsprechend führt eine einen Mindestwert unterschreitende Empfangsleistung (Objekt 27' mit geringem Reflexionsgrad oder geneigter spiegelnder Fläche im Überwachungsbereich, Figur 4) und/oder ein zu kleiner Distanzmeßwert (Objekt 27 im Überwachungsbereich, Fig. 3) zur Signalgabe "Schutzfeld nicht frei" am Ausgang 17'' des Relais 17. Die untere und/oder obere Toleranzgrenze der Amplitude des reflexionsbedingten Empfangsleistungssignals wird dabei ebenfalls im Mikroprozessor 11 berechnet.

Des weiteren wird der Schaltzustand "Schutzbereich nicht frei" beim Eintauchen eines Gegenstands 27 aus einer beliebigen Richtung, bei Verschmutzung oder Abdeckung der Lichttasteroptik sowie bei Verschmutzung und Lageänderungen der Referenzfläche 25 zuverlässig ausgegeben.

Der Lichttaster 10 überwacht sich, abgesehen von einem Eigentest beim Einschalten, bei jeder Messung durch zyklische Kontrolle der Istdistanz und der Istintensität selbst. Mittels einer seriellen Schnittstelle sind die Distanzmeßwerte und der Gerätestatus auslesbar.

Die Referenzfläche 25 kann eine beliebig ausgebildete Berandungskontur aufweisen und der Sende- und Empfangslichtstrahl kann durch einen Drehspiegel (Scanner) über 180° bzw. 90° abgelenkt werden. In diesen Fällen eignet sich als Lichtsender z. B. ein Halbleiter-Laser. Mittels des Drehspiegels lassen sich Flächen überwachen, ferner die Lage von zu überwachenden Objekten.

In bestimmten Fällen kann es vorteilhaft sein, als Bewertungsgröße für die Distanz der Referenzfläche vom Lichtsender bzw. vom Lichtempfänger die Laufzeit des Lichtes heranzuziehen. Die Lichtlaufzeit kann in bekannter Weise u. a. dadurch ermittelt werden, daß eine bestimmte Anzahl von einer Diode (z.B. Laserdiode) ausgesandte kurze Lichtimpulse im Empfänger detektiert und die Impulslaufzeit vom Lichtsender zur Referenzfläche 25 und zurück in ein abstandsproportionales Analogsignal umgesetzt und durch den Mikroprozessor als Sollwert gespeichert wird.

Die zweite Bewertungsgröße kann dabei die aus der reflektierten Strahlungsleistung der bestimmten Anzahl Lichtimpulse oder die aus einem zeitlich begrenzten Dauersignal resultierende Signalamplitude bilden.

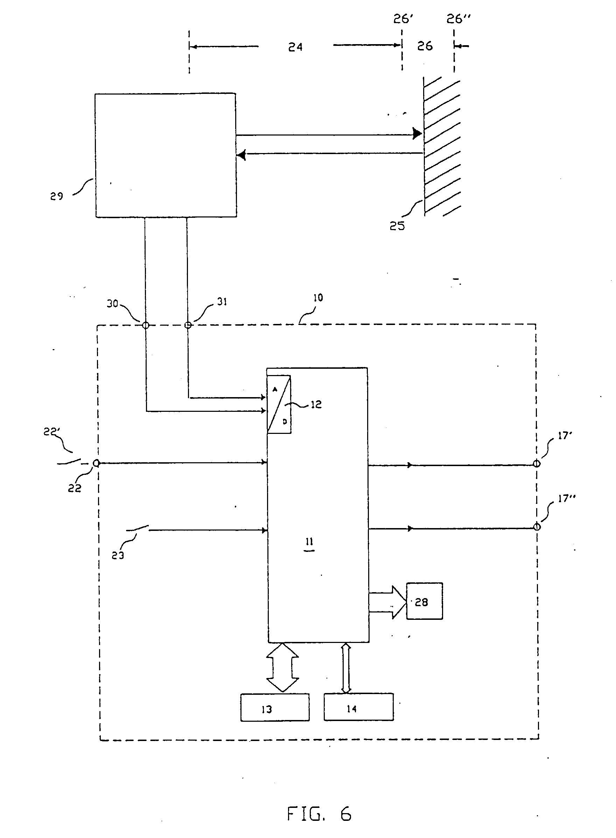

Der Sende- und Empfangsteil einer Überwachungseinrichtung mit Laufzeitmessung des Lichtstrahls ist in Fig. 6 mit 29 bezeichnet. An einem Ausgang 30 des Sende- und Empfangsteils steht die Amplitude des von der Referenzfläche 25 reflektierten Lichts an, und am anderen Ausgang 31 liegt das Impulslaufzeitsignal. Die Amplitude des reflektierten Lichts und das Impulsaufzeitsignal werden dem Analog/Digitalwandler 12 zugeführt und im Mikroprozessor 11 ebenso wie im beschriebenen Fall der Distanzmessung mittels eines als Positionsdetektor ausgebildeten Lichtempfängers berechnet, bzw. ausgewertet.

Die Referenzfläche 25 kann gegebenenfalls auch durch einen Retroreflektor verkörpert sein. In diesem Fall wird der Reflexlichttaster zur Reflexionslichtschranke.

Aus sicherheitstechnischen Gründen empfiehlt es sich, die Hard- und Software der erfindungsgemäßen Überwachungseinrichtung redundant auszulegen. Zur flächendeckenden Überwachung eines Gefahrenbereichs kann die erfindungsgemäße Einrichtung durch entsprechende Mehrfachanordnung im jeweils erforderlichen Abstand eingesetzt werden.

## Patentansprüche

1. Einen Sender, einen Empfänger und eine Schaltungsanordnung zur Signalauswertung aufweisende Überwachungseinrichtung für das berührungslose Erfassen von im zu überwachenden Bereich befindlichen oder in diesen Bereich eindringenden Objekten, bei der Sender und Empfänger auf derselben Seite des zu überwachenden Bereichs angeordnet sind, wobei die von einem Objekt reflektierten Sendesignale über einen Analog / Digitalwandler einem Mikrocomputer zugeführt werden, der eine Amplituden-Toleranzgrenze zur Unterscheidung der von einem Objekt reflektierten Sendesignale und der von einem Hintergrund stammenden Signale berechnet und bei einem im Überwachungsbereich detektierten Objekt eine Signalabgabe auslöst, dadurch gekennzeichnet, daß der Sender (15) und der Empfänger (16) einen Distanzsensor bilden, und daß der zu überwachende Bereich durch eine Referenzfläche (25) begrenzt ist, wobei die von der Referenzfläche (25) reflektierten Sendesignale definierte Hintergrundsignale bilden, und wobei im Mikrocomputer (11) die Distanz der Referenzfläche (25) vom Sender / Empfänger (15, 16) einschließlich einer oberen und unteren Distanz-Toleranzgrenze sowie eine obere und untere Amplituden-Toleranzgrenze der Signalamplitude der Empfangssignale berechnet wird und diese Werte sowie die Signalamplitude der Empfangssignale als Sollwerte in einem nichtflüchtigen Speicher gespeichert sind und zyklisch mit den Istwerten verglichen werden, wobei beim Abweichen der Istwerte von einem der festgelegten Sollwerte ein Warn- und/oder Abschaltvorgang ausgelöst wird.

2. Überwachungseinrichtung nach Anspruch 1, dadurch gekennzeichnet, daß sie als Reflexlichttaster ausgebildet und der Lichtemfpänger (16) durch einen zwei positionsproportionale Teilströme generierenden Positionsdetektor verkörpert ist, dessen Teilströme die Bewertungsgrößen für die Distanzmessung und die reflektierte Strahlungsleistung bilden.

3. Überwachungseinrichtung nach Anspruch 1, dadurch gekennzeichnet, daß sie als Reflexlichttaster ausgebildet ist, als Bewertungsgröße für die Distanz der Referenzfläche (25) die Laufzeit des Lichts vom Lichtsender zur Referenzfläche (25) und zurück dient und als zweite Bewertungsgröße die aus der reflektierenden Strahlungsleistung resultierende Signalamplitude herangezogen ist

4. Überwachungseinrichtung nach Anspruch 2 oder 3, dadurch gekennzeichnet, daß als Referenzfläche (25) ein Retroreflektor dient.

5. Überwachungseinrichtung nach einem der vorhergehenden Ansprüche, gekennzeichnet, durch ihre Selbstüberwachung durch zyklische Kontrolle der Istdistanz und der Istempfangsleistung.

6. Überwachungseinrichtung nach den Ansprüchen 2 und 3, dadurch gekennzeichnet, daß der Sende- und Empfangslichtstrahl durch einen Drehspiegel abgelenkt wird und die Referenzfläche (25) eine beliebige Berandungskontur aufweist.

7. Überwachungseinrichtung nach einem der vorhergehenden Ansprüche, dadurch gekennzeichnet, daß als Lichtquelle ein Halbleiter-Laser verwendet wird.

8. Überwachungseinrichtung nach einem der vorhergehenden Ansprüche, gekennzeichnet durch deren ein Sicherheitsgitter bildende Mehrfachanordnung.

9. Überwachungseinrichtung nach einem der vorhergehenden Ansprüche, gekennzeichnet durch redundante Auslegung der Hard- und Software.

## Claims

1. Surveillance apparatus, which comprises a transmitter, a receiver and a circuit arrangement for signal evaluation, for the contactless detection of objects present in the region to be monitored or entering this region, in which equipment the transmitter and the receiver are arranged on the same side of the region to be monitored, wherein the transmitted signals reflected by an object are fed by way of an analog-to-digital converter to a microcomputer which computes an amplitude tolerance limit for the distinction between the transmitted signals reflected by an object and the signals originating from a background and which triggers a signal output in the case of an object being detected in the region to be monitored, characterised thereby, that the transmitter (15) and the receiver (16) form a distance sensor and that the region to be monitored is bounded by a reference surface (25), wherein the transmitted signals transmitted by the reference surface (25) form defined background signals and wherein the distance of the reference surface (25) from the transmitter-receiver (15, 16) inclusive of an upper and a lower distance tolerance limit as well as an upper and a lower amplitude tolerance limit of the signal amplitude of the received signals is computed in the microcomputer (11) and these values as well as the signal amplitude of the received signals are stored as target values in a non-volatile storage device and cyclically compared with the actual values, wherein a warning operation and/or a switching-off operation is triggered on a deviation of the actual values from one of the fixed target values.

2. Surveillance apparatus according to claim 1, characterised thereby, that it is constructed as reflected light scanner and the light receiver (16) is embodied by a position detector, which generates two partial currents proportional to position and the partial currents of which form the weighting magnitudes for the distance measurement and the reflected radiation power.

3. Surveillance apparatus according to claim 1, characterised thereby, that it is constructed as reflected light scanner, the transit time of the light from the light transmitter to the reference surface (25) and back serves as weighting magnitude for the distance of the reference surface (25) and the signal amplitude resulting from the reflected radiation power is drawn on as second weighting magnitude.

4. Surveillance apparatus according to claim 2 or 3, characterised thereby, that a return reflector serves as reference surface (25).

5. Surveillance apparatus according to one of the preceding claims, characterised by its self-monitoring by cyclical checking of the actual distance and the actual received power.

6. Surveillance apparatus according to the claims 2 and 3, characterised thereby, that the transmitted and received light beam is deflected by a rotary mirror and the reference surface (25) has any desired boundary outline.

7. Surveillance apparatus according to one of the preceding claims, characterised thereby, that a semiconductor laser is used as light source.

8. Surveillance apparatus according to one of the preceding claims, characterised by its multiple arrangement forming a security grid.

9. Surveillance apparatus according to one of the preceding claims, characterised by redundant design of the hardware and the software.

## Revendications

1. Dispositif de surveillance, comportant un émetteur, un récepteur et un circuit d'analyse ou d'exploitation de signal, destiné à la détection sans contact d'objets se trouvant dans une zone à surveiller ou pénétrant dans cette zone, dispositif dont l'émetteur et le récepteur sont placés du même côté de la zone à surveiller et dans lequel les signaux d'émission réfléchis par un objet sont envoyés à travers un convertisseur analogique/numérique à un micro-ordinateur qui calcule une limite de tolérance d'amplitude pour distinguer les signaux d'émission réfléchis par un objet et les signaux provenant d'un fond, et avec lequel un objet détecté dans la zone de surveillance déclenche la délivrance d'un signal, caractérisé en ce que l'émetteur (15) et le récepteur (16) forment un capteur de distance, et que la zone à surveiller est délimitée par une surface de référence (25), les signaux d'émission réfléchis par la surface de référence (25) constituant des signaux de fond définis, la distance de la surface de référence (25) de l'émetteur/récepteur (15, 16), y compris une limite de tolérance de distance supérieure et une limite de tolérance de distance inférieure, de même qu'une limite de tolérance d'amplitude supérieure et une limite de tolérance d'amplitude inférieure de l'amplitude des signaux de réception, étant calculées dans le micro-ordinateur (11) et ces valeurs, ainsi que l'amplitude des signaux de réception, étant mémorisées en tant que valeurs de consigne dans une mémoire non volatile et comparées cycliquement aux valeurs réelles, avec déclenchement d'une opération d'avertissement et/ou d'arrêt en cas de déviation des valeurs réelles d'une des valeurs de consigne fixées.

2. Dispositif de surveillance selon la revendication 1, caractérisé en ce qu'il est réalisé comme un détecteur de lumière réflexe et le récepteur de lumière (16) est représenté par un détecteur de position générant deux courants partiels qui sont proportionnels à la position et constituent des grandeurs d'évaluation pour la mesure de la distance et de la puissance de rayonnement réfléchie.

3. Dispositif de surveillance selon la revendication 1, caractérisé en ce qu'il est réalisé comme un détecteur de lumière réflexe, le temps de propagation de la lumière sur le trajet aller et retour de l'émetteur de lumière à la surface de référence (25) servant de grandeur d'évaluation pour la distance de la surface de référence (25) et l'amplitude de signal résultant de la puissance de rayonnement réfléchie étant utilisée comme seconde grandeur d'évaluation.

4. Dispositif de surveillance selon la revendication 2 ou 3, caractérisé en ce qu'un rétroréflecteur sert de surface de référence (25).

5. Dispositif de surveillance selon une des revendications précédentes, caractérisé par la surveillance de lui-même au moyen du contrôle cyclique de la distance réelle et de la puissance reçue réelle.

6. Dispositif de surveillance selon les revendications 2 et 3, caractérisé en ce que le rayon lumineux d'émission et de réception est dévié par un miroir tournant et la surface de référence (25) présente un contour de délimitation quelconque.

7. Dispositif de surveillance selon une des revendications précédentes, caractérisé en ce qu'un laser à semi-conducteur est employé comme source de lumière.

8. Dispositif de surveillance selon une des revendications précédentes, caractérisé par son agencement en plusieurs exemplaires formant un réseau de sécurité.

9. Dispositif de surveillance selon une des revendications précédentes, caractérisé par une conception redondante du matériel et du logiciel.
